# EUROPÄISCHE PATENTSCHRIFT

(11) **EP 2 225 821 B1**
(45) Veröffentlichungstag und Bekanntmachung des Hinweises auf die Patenterteilung: **26.09.2018**
(21) Anmeldenummer: 08867213.4
(22) Anmeldetag: 12.12.2008
(51) Int. Cl.: H02K 33/04, B26B 19/28

(54) **ANTRIEBSEINHEIT FÜR EINE HAARSCHNEIDEMASCHINE**
DRIVE UNIT FOR A HAIR CUTTING MACHINE
UNITÉ D'ENTRAÎNEMENT POUR UNE TONDEUSE À CHEVEUX

(30) Priorität: 02.01.2008 DE 102008003135
(43) Veröffentlichungstag der Anmeldung: 08.09.2010
(73) Patentinhaber: WAHL GmbH, 78089 Unterkirnach (DE)
(72) Erfinder: SCHWER, Heinrich, 78136 Schonach (DE); MÜLLER, Stefan, 78554 Aldingen (DE); KIENZLER, Gerhard, 78089 Triberg (DE)
(74) Vertreter: Westphal, Mussgnug & Partner Patentanwälte mbB
(86) Internationale Anmeldenummer: PCT/EP2008/010614
(87) Internationale Veröffentlichungsnummer: WO 2009/083117

(56) Entgegenhaltungen:
- EP-A- 0 802 614
- WO-A-00/27599
- JP-A- 9 019 123
- JP-A- 2002 177 665
- US-A1- 2006 145 798

## Beschreibung

Die Erfindung betrifft eine Antriebseinheit für eine Haarschneidemaschine gemäß Oberbegriff des Patentanspruchs 1.

Derartige Antriebseinheiten sind grundsätzlich bekannt und bestehen aus einem Stator, einer Erregerspule und einem Anker. Der Stator und der Anker sind dabei aus einzelnen isolierten Blechlagen stanzpaketiert, um ein Auftreten von Wirbelströmen zu verhindern. Der Stator ist im Wesentlichen U-förmig ausgebildet und weist einen ersten und einen zweiten Schenkel auf, wobei ein zusätzlicher Schenkel vorgesehen ist, der zwischen dem ersten Schenkel und dem zweiten Schenkel angeordnet ist. Die Erregerspule ist als Spule für einen Elektromagneten ausgestaltet und ist an dem wenigstens einem zusätzlichen Schenkel anordenbar. Quer zu den Schenkeln des Stators ist der Anker angeordnet, wobei zwischen dem ersten Schenkel und dem Anker und zwischen dem zweiten Schenkel und dem Anker seitliche Luftspaltabschnitte und zwischen dem zusätzlichen Schenkel und dem Anker mittlere Luftspaltabschnitte ausgebildet sind. Die mittleren Luftspaltabschnitte und die seitlichen Luftspaltabschnitte verlaufen dabei schräg geneigt in Bezug auf eine Längsachse des zusätzlichen Schenkels.

Eine solche Antriebseinheit ist beispielsweise aus der WO 00/27599 der Anmelderin bekannt.

Nachteilig ist bei dieser Konstruktion, dass keine optimale mechanische Leistung der Antriebseinheit erreicht wird. Es ist des Weiteren nachteilig, dass bei einer derartigen Anordnung der Kupferverbrauch für die Erregerspule sowie der Stanzverschnitt bei dem Dynamoblech, aus dem der Stator und der Anker paketiert werden, relativ hoch sind.

Es ist die Aufgabe der Erfindung, eine bekannte Antriebseinheit für eine Haarschneidemaschine der eingangs genannten Art derart weiterzubilden, dass sie die geschilderten Nachteile nicht mehr aufweist. Insbesondere soll die mechanische Leistung der Maschine verbessert werden, während gleichzeitig der Kupferverbrauch sowie der Verschnitt von Dynamoblech reduziert werden sollen.

Diese Aufgabe wird gelöst durch eine Antriebseinheit für eine Haarschneidemaschine mit dem Merkmal des Patentanspruchs 1. Vorteilhafte Ausführungsformen sind durch die Merkmale der Unteransprüche wiedergegeben.

Eine erfindungsgemäße Antriebseinheit für eine Haarschneidemaschine weist einen Antriebsmotor aus einem im Wesentlichen U-förmig ausgebildeten Stator mit einem ersten und einem zweiten Schenkel und wenigstens einem zusätzlichen Schenkel auf, der zwischen dem ersten Schenkel und dem zweiten Schenkel angeordnet ist. Der Antriebsmotor weist des Weiteren wenigstens eine Erregerspule auf, die an dem wenigstens einen zusätzlichen Schenkel anordenbar ist. Quer zu den Schenkeln des Stators ist ein Anker vorgesehen, wobei zwischen dem ersten Schenkel und dem Anker und zwischen dem zweiten Schenkel und dem Anker seitliche Luftspaltabschnitte und zwischen dem zusätzlichen Schenkel und dem Anker mittlere Luftspaltabschnitte gebildet sind, die sich in Bezug auf eine Längsachse des zusätzlichen Schenkels jeweils schräg geneigt verlaufend erstrecken. Eine Vergrößerung eines ersten seitlichen Luftspaltabschnittes zwischen dem ersten Schenkel und dem Anker wird durch eine erste Nase erreicht, die an dem ersten Schenkel endseitig und von dem zusätzlichen Schenkel wegweisend angeordnet ist. Durch eine an dem zweiten Schenkel zu dem zusätzlichen Schenkel hinweisend und zu der Nase korrespondierend angeordnete Ausklinkung wird erreicht, dass ein zweiter Luftspaltabschnitt zwischen dem zweiten Schenkel und dem Anker nicht verkleinert wird und im Stanzzuschnitt trotzdem eine platzsparende Anordnung möglich ist. Sowohl der Stator als auch der Anker sind dabei aus einzelnen isolierten Stanzblechen gestapelt, wobei die einzelnen Lagen beispielsweise vernietet sind. Erfindungsgemäß ist der Anker über eine Bügelfeder, die an dem zweiten Ende des Ankers anordenbar ist, mit dem Stator schwingfähig verbunden. Die schwingfähige Anordnung des Ankers über die Bügelfeder am Stator hat den Vorteil, dass die Antriebseinheit außerhalb des Gehäuses vormontiert und anschließend als Modul in dem Gehäuse montiert werden kann. Die Bügelfeder kann dabei am Anker und/oder dem Stator durch Einpressen in einen entsprechend ausgeformten Schlitz befestigt sein.

Zusätzlich ist an dem zweiten Schenkel endseitig und von dem zusätzlichen Schenkel wegweisend eine zweite Nase angeordnet. Durch die zweite Nase wird erreicht, dass der zweite seitliche Luftspaltabschnitt zwischen dem zweiten Schenkel und dem Anker ebenfalls weiter vergrößert wird. Besonders vorteilhaft ist diese Ausgestaltungsform, wenn der zweite Schenkel der einem Lager des Ankers nächst befindliche Schenkel des Stators ist, da bei dem näher am Lager des Ankers befindlichen Luftspaltabschnitt geringere Luftspaltschwankungen auftreten und der Luftspalt insgesamt mit einer geringeren Spaltbreite ausgebildet ist.
Zur weiteren Verbesserung der mechanischen Leistung ist es vorteilhaft, wenn der Anker im Bereich des zusätzlichen Schenkels eine Ausnehmung aufweist, die im Wesentlichen dreiecksförmig ausgebildet ist und zum Stator weisend wenigstens einen Abschnitt aufweist, der parallel zu der Längsachse des zusätzlichen Schenkels verläuft. Der zusätzliche Schenkel ist dabei geeignet lang ausgebildet, dass wenigstens mit einem parallel zu seiner Längsachse verlaufenden Abschnitt in die korrespondierend in dem Anker ausgebildete Ausnehmung eingreift. Durch eine derartige Ausgestaltung von Anker und zusätzlichem Schenkel wird gewährleistet, dass auch während des Betriebs der Antriebseinheit eine permanente Überdeckung von Anker und zusätzlichem Schenkel vorhanden ist und damit der magnetische Fluss in diesem Bereich optimiert wird.

Zur Magnetflussoptimierung ist es sinnvoll, wenn der Stator an Übergängen zu den Schenkeln Innenradien aufweist, die geeignet ausgebildet sind, einer Überhöhung der magnetischen Flussdichte in diesem Bereich entgegenzuwirken. Als Innenradien sind in diesem Zusammenhang abgerundete Übergänge zu verstehen, durch die eine lokale Überhöhung der magnetischen Flussdichte verhindert wird.

Zur weiteren Optimierung des Materialverbrauchs ist es sinnvoll, dass der wenigstens eine zusätzliche Schenkel dünner als der erste und der zweite Schenkel ausgebildet ist. Durch diese Maßnahme ist es möglich, die gleiche Anzahl an Spulenwindungen mit einem reduzierten Verbrauch an Kupferdraht zu erreichen oder beim gleichbleibenden Verbrauch an Kupferdraht eine erhöhte Windungszahl der Erregerspule zu realisieren.

Die Auslegung der Erregerspule und des zusätzlichen Schenkels erfolgt idealerweise derart, dass der zusätzliche Schenkel so ausgebildet ist, dass er bei gegebener magnetischer Feldstärke annähernd in magnetischer Sättigung betrieben wird. Ein Überschreiten des Sättigungsbereiches ist in diesem Zusammenhang nicht sinnvoll, da bei einem Betrieb in Sättigung nur durch einen extrem erhöhten Aufwand des Produkts aus Strom x Windungen eine erhöhte Feldstärke erzielt werden kann.

Für die geometrische Optimierung des Stanzzuschnittes ist es in diesem Zusammenhang sinnvoll, wenn der Stator zwischen dem ersten Schenkel und dem wenigstens einem zusätzlichen Schenkel eine Aussparung aufweist, in die in einer Stanzanordnung ein zusätzlicher Schenkel eines weiteren Statorblechs eingreift. Durch eine derartige Anordnung ist es möglich, den zusätzlichen Schenkel länger auszubilden und trotzdem eine möglichst kompakte Anordnung für den Stanzzuschnitt zu ermöglichen.

In einer Weiterbildung der Erfindung sind bei dem Stator zwei parallel angeordnete zusätzliche Schenkel vorgesehen. Diese Ausgestaltungsform hat den Vorteil, dass die Breite der zusätzlichen Schenkel weiter reduziert werden kann und die Anordnung von zwei Erregerspulen möglich ist.

Eine Anordnung von Stanzprofilen für einen Stator, wie er oben beschrieben wurde, zeichnet sich dadurch aus, dass zwei Statorbleche um 180° gedreht angeordnet sind, wobei die Anordnung derart erfolgt, dass jeweils die erste Nase eines Statorblechs in die Ausklinkung des anderen Statorblechs eingreift. Durch diese Anordnung ist ein besonders kompaktes und verschnittsparendes Stanzen der einzelnen Statorbleche möglich.

Eine Antriebseinheit, wie sie oben beschrieben wurde, wird besonders bevorzugt in einer Haarschneidemaschine eingesetzt.

Die Erfindung wird nachfolgend unter Bezugnahme auf die beigefügten Figuren näher erläutert. Es zeigen:
- Figur 1: eine Draufsicht auf eine erste Ausführungsform, wobei die aus Stator und Erregerspule bestehende Einheit separat zu dem Anker ausgebildet ist,
- Figur 2: eine Draufsicht auf eine Anordnung von Stanzprofilen für den Stator aus Figur 1,
- Figur 3: eine Draufsicht auf eine zweite Ausführungsform, wobei der Stator mit zwei zusätzlichen Schenkeln ausgebildet ist,
- Figur 4: eine Draufsicht auf eine Anordnung von Stanzprofilen für den Stator aus Figur 3 und
- Figur 5: eine Draufsicht auf einen Ausschnitt des Ausführungsbeispiels aus Figur 1, wobei der Anker und der Stator über eine Bügelfeder verbunden sind.

In der nachstehenden, detaillierten Figurenbeschreibung sind jeweils übereinstimmende Teile mit derselben Bezugsziffer versehen.

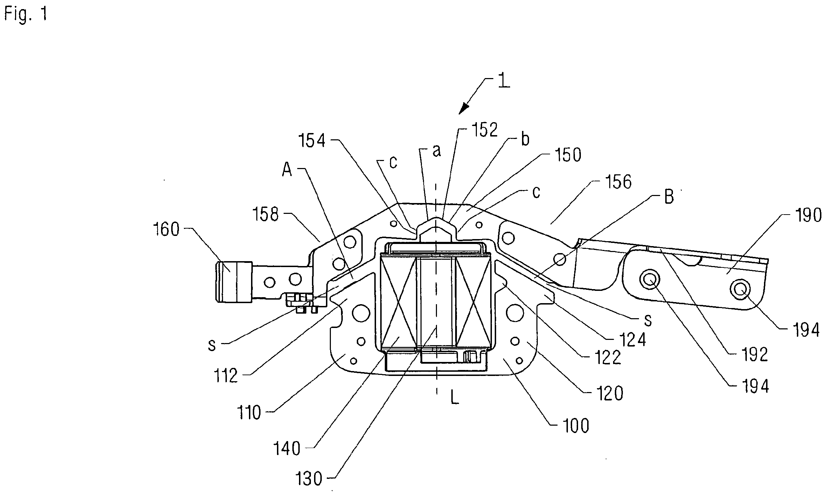

Figur 1 zeigt eine Draufsicht auf ein erstes Ausführungsbeispiel einer erfindungsgemäßen Antriebseinheit für eine Haarschneidemaschine mit einem Antriebsmotor 1. Der Antriebsmotor 1 ist aus einem Stator 100 mit einer Erregerspule 140 sowie einem korrespondierend zu dem Stator 100 angeordneten Anker 150 aufgebaut. Der Stator 100 ist im Wesentlichen U-förmig mit einem ersten Schenkel 110 und einem zweiten Schenkel 120 ausgebildet. Zwischen dem ersten Schenkel 110 und dem zweiten Schenkel 120 ist ein zusätzlicher Schenkel 130 angeordnet, an dessen Umfang die Erregerspule 140 sitzt. Der Anker 150 ist quer zu den Enden der Schenkel 110, 120, 130 des Stators 100 angeordnet, wobei an dem ersten Ende 158 ein Mitnehmer 160 und an dem zweiten Ende 156 eine Lagerung 190 befestigt ist. Der Mitnehmer 160 ist geeignet ausgebildet, einen Schneidsatz einer Haarschneidemaschine in Schwingung zu versetzen und so eine Bewegung des Ankers 150 auf den Schneidsatz zu übertragen. Die Lagerung 190 ist beispielsweise über Bolzen 194 in einem Gehäuse befestigt und weist eine Schwingfeder 192 auf, über welche der Anker 150 schwingfähig gelagert ist.

Um eine möglichst optimale mechanische Leistung des Antriebsmotors 1 zu erreichen, sind verschiedene Maßnahmen zur Optimierung des Antriebsmotors 1 realisiert.

In einem ersten Schritt ist es notwendig, den magnetischen Fluss innerhalb des Antriebsmotors 1 möglichst optimal zu führen und möglichst große magnetisch wirksame Luftspaltflächen bzw. Luftspaltabschnitte zu erzeugen. Zwischen dem ersten Schenkel 110 des Stators 100 und dem Anker 150 ist ein erster Luftspaltabschnitt A gebildet, der durch die Anformung einer Nase 112 nach außen hin vergrößert wird. Ein zweiter seitlicher Luftspaltabschnitt B, der zwischen dem zweiten Schenkel 120 des Stators 100 und dem Anker 150 gebildet ist, wird ebenfalls außenseitig durch die Anformung einer zweiten Nase 124 vergrößert. Die Vergrößerung des zweiten Luftspaltabschnittes B zeigt eine besonders große Wirkung auf die mechanische Leistung des Antriebsmotors 1, da der zweite Luftspaltabschnitt B näher an der Lagerung 190 des Ankers 150 befindlich ist und daher geringere Schwankungen einer Spaltbreite s auftreten.

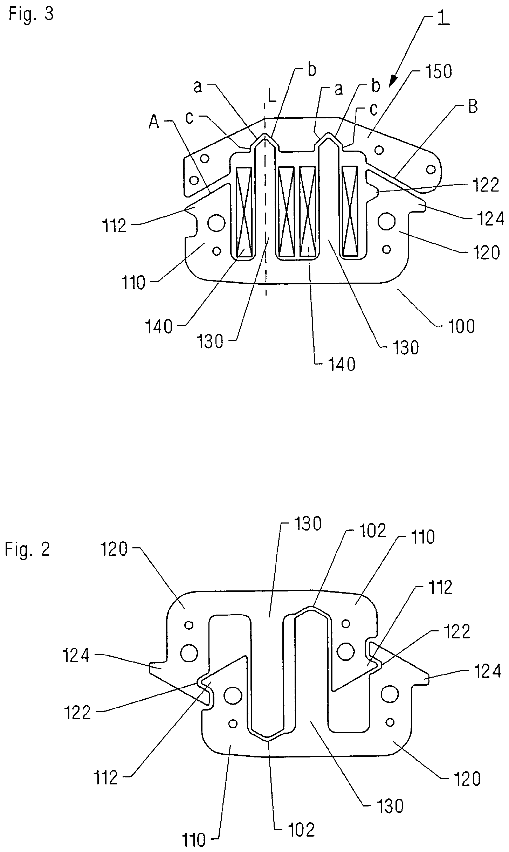

Um trotz der Anformung der ersten Nase 112 eine möglichst platzsparende Anordnung von Stanzprofilen für den Stator 100 zu ermöglichen, ist an dem zweiten Schenkel 120 eine Ausklinkung 122 vorgesehen. Die Anordnung der Stanzprofile wird jedoch näher unter Bezugnahme auf Figur 2 erläutert.

Ein zweiter Ansatz zur Verbesserung der mechanischen Leistung des Antriebsmotors 1 ist durch die Optimierung eines Luftspalts zwischen dem zusätzlichen Schenkel 130 und dem Anker 150 gegeben. Der Anker 150 weist dazu im Bereich des zusätzlichen Schenkels 130 eine Ausnehmung 152 auf, die im Wesentlichen dreiecksförmig ausgebildet ist und statorseitig einen parallel zu einer Längsachse des zusätzlichen Schenkels 130 verlaufenden Abschnitt 154 aufweist. Der zusätzliche Schenkel 130 ist endseitig ebenfalls dreiecksförmig ausgebildet und greift in die Ausnehmung 152 mit gesamter Breite ein. Zwischen dem zusätzlichen Schenkel 130 und dem Anker 150 sind damit mittlere Luftspaltabschnitte a, b gebildet, die bezogen auf die Längsachse L schräg nach außen verlaufen und in parallel zur Längsachse L verlaufende Luftspaltabschnitte c übergehen. Durch eine derartige Ausgestaltung des Antriebsmotors 1 wird ein tieferes Eingreifen des zusätzlichen Schenkels 130 in die Ausnehmung 152 des Ankers 150 erreicht, wodurch auch während eines Betriebs des Antriebsmotors 1 eine permanente vertikale Überdeckung von zusätzlichem Schenkel 130 und Anker 150 gewährleistet ist. Durch diese vertikale Überdeckung in den parallel zur Längsachse L verlaufenden Luftspaltabschnitten c wird ein verbesserter Magnetfluss erreicht, was positive Auswirkungen auf die mechanische Leistung des Antriebsmotors 1 hat.

Ein dritter Ansatz zur Leistungsoptimierung des Leistungsmotors 1 besteht darin, den zusätzlichen Schenkel 130 mit geringerer Breite d auszubilden. Durch eine geringere Breite d des zusätzlichen Schenkels 130 ist es bei sonst gleichbleibendem Materialaufwand möglich, eine größere Anzahl an Spulenwindungen an dem zusätzlichen Schenkel 130 anzuordnen. Dieser Ansatz erlaubt es auch, bei gleichbleibender Windungsanzahl mit einem geringeren Verbrauch an Kupferdraht die gleiche magnetische Feldstärke H zu erzeugen. Als Obergrenze ist dabei eine ab einer gewissen Feldstärke eintretende magnetische Sättigung in einem Material zu beachten. Im vorliegenden Fall wird der zusätzliche Schenkel 130 des Stators 100 annähernd in magnetischer Sättigung betrieben.

Figur 2 zeigt eine Draufsicht auf eine Anordnung von Stanzprofilen für den Stator 100 aus Figur 1. In dieser Ansicht ist die korrespondierende Anordnung der ersten Nase 112 an dem ersten Schenkel 110 mit der Ausklinkung 122 an dem zweiten Schenkel 120 zu erkennen. Der ersten Schenkel 110 wird nach dem Eingriff des zweiten Schenkels 120 über der Ausklinkung 122 in der gleichen Breite, wie mit der angeformten Nase 112 weitergeführt. Diese Maßnahme ist nicht zwingend notwendig, würde aber keine Reduzierung des Stanzverschnitts bewirken und kann somit positiv zur Magnetfeldführung eingesetzt werden. Die zweiten Nasen 124 sind außenseitig im Stanzprofil vorgesehen und bewirken damit eine Verbreiterung, die jedoch auf Grund der großen mechanischen Wirkung des verbreiteten zweiten Luftspaltes B in Kauf genommen wird.

Zwischen dem ersten Schenkel 110 und dem zusätzlichen Schenkel 130 ist eine Aussparung 102 angeordnet. Diese Aussparung 102 ermöglicht es, die Stanzprofile trotz einer längeren Ausbildung des zusätzlichen Schenkels 130 in der dargestellten Form ineinander zu legen und so den Stanzverschnitt zu reduzieren.

Figur 3 zeigt eine Draufsicht auf eine zweite Ausführungsform einer Antriebseinheit für eine Haarschneidemaschine. Der Übersichtlichkeit halber sind der Mitnehmer 160 sowie die Lagerung 190 aus Figur 1 nicht dargestellt. Die in Figur 3 dargestellte Ausführungsform unterscheidet sich von der in Figur 1 im Wesentlichen dadurch, dass zwei zusätzliche Schenkel 130 vorgesehen sind. Dementsprechend weist der Anker 150 auch zwei Ausnehmungen 152 auf, die beide wie im ersten Ausführungsbeispiel beschrieben ausgeformt sind. An jedem der zusätzlichen Schenkel 130 ist je eine Erregerspule 140 angeordnet, wobei die Erregerspulen 140 für einen Betrieb des Antriebsmotors 1 synchron ansteuerbar sind. Wie in Figur 1 dargestellt, ist der erste Luftspaltabschnitt A durch die an dem ersten Schenkel 110 angeformte erste Nase 112 und der zweite Luftspaltabschnitt B durch die an dem zweiten Schenkel angeformte zweite Nase 124 vergrößert. Der zweite Schenkel 120 weist auch in diese Ausführungsform eine korrespondierend zu der ersten Nase 112 angeordnete Ausklinkung 122 auf. Durch die Ausgestaltung des Stators 100 mit zwei zusätzlichen Schenkels 130 und zwei daran angeordneten Erregerspulen 140 ist es einerseits möglich, durch die zwei Erregerspulen 140 in dem Stator 100 einen größeren magnetischen Fluss zu erzeugen und gleichzeitig die magnetisch relevante Spaltfläche, die sich aus den seitlichen Luftspaltabschnitten A, B und den mittleren Luftspaltabschnitten a, b sowie den parallel zur Längsachse der zusätzlichen Schenkel 130 verlaufenden Abschnitten c zusammensetzt zu vergrößern und so die mechanische Leistung des Antriebsmotors 1 zu optimieren.

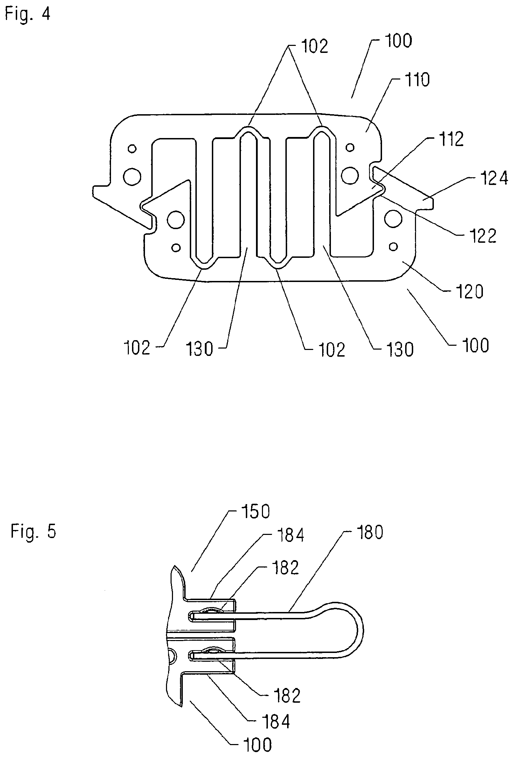

Figur 4 zeigt eine Draufsicht auf eine Anordnung von Stanzprofilen für einen Stator 100, wie er in Figur 3 dargestellt ist. Analog zur Anordnung der Stanzprofile aus Figur 2 greift wieder die erste Nase 112 in die Ausklinkung 122 ein und ermöglicht so das Ineinanderlegen zweier Stanzprofile. In der in Figur 4 dargestellten Anordnung kommt einer der beiden zusätzlichen Schenkel 130 zwischen dem ersten Schenkel 110 und einem zusätzlichen Schenkel 130 des zweiten Stanzprofils zu liegen, wobei der zweite zusätzliche Schenkel 130 zwischen den beiden zusätzlichen Schenkeln 130 des anderen Stanzprofils angeordnet ist. Um die zusätzlichen Schenkel 130 mit einer größeren Länge ausbilden zu können, können dellenförmige Aussparungen zwischen den Schenkeln vorgesehen sein, die eine kompakte Anordnung der Stanzprofile ermöglichen.

Es ist insbesondere festzuhalten, dass es bei der hier dargestellten Ausführungsform notwendig ist, den ersten Schenkel 110 und den zweiten Schenkel 120 des Stators 100 mit einer geringeren Breite auszubilden um die in Figur 4 dargestellte Anordnung der Stanzprofile zu ermöglichen.

Figur 5 zeigt einen Ausschnitt des Ausführungsbeispiels aus Figur 1, wobei anstelle der Lagerung 190 eine Bügelfeder 180 vorgesehen ist, die den Anker 150 mit dem Stator 100 verbindet. In dieser Ausführungsform ist es besonders vorteilhaft, dass der Antriebsmotor 1 außerhalb eines Gehäuses der Haarschneidemaschine vormontiert werden kann und anschließend als komplettes Modul in das Gehäuse eingesetzt wird. Zur Befestigung der Bügelfeder 180 können im Anker 150 und dem Stator 100 entsprechende Schlitze 182 vorgesehen sein, in denen die Bügelfeder 180 verpresst wird. Dies ermöglicht eine besonders einfache Montage. Im dargestellten Ausführungsbeispiel weisen der Stator 100 und der Anker 150 federseitig eine rechteckförmige Anformung 184 auf, in der die Schlitze 182 angeordnet sind. Die Anformung 184 kann aber auch so ausgeformt sein, dass ein geneigt verlaufender Schlitz erreicht wird.

Zusammenfassend ist festzuhalten, dass durch die dargestellten Ausführungsformen mehrere Vorteile erreicht werden können. Insbesondere ist durch die neuartige Ausgestaltung der seitlichen Luftspaltabschnitte A, B sowie der mittleren Luftspaltabschnitte a, b und deren Ergänzung durch die parallelen Luftspaltabschnitte c eine Optimierung der mechanischen Leistung des Antriebsmotors möglich. Des Weiteren wird durch die korrespondierende Anordnung der ersten Nase 112 mit der Ausklinkung 122 ermöglicht, bei der Herstellung des beschriebenen Antriebsmotors 1 eine kompakte Anordnung der Stanzprofile zu erreichen und den Verschnitt beim Stanzen der einzelnen Blechlagen zu minimieren. Durch die Ausbildung des zusätzlichen Schenkels 130 mit einer geringeren Breite d ist es außerdem möglich, den magnetischen Fluss im Stator zu optimieren und den Kupferverbrauch für die Wicklungen der Erregerspule 140 zu reduzieren.

### Bezugszeichenliste

- 1: Antriebsmotor

- 100: Stator
- 102: Aussparung

- 110: erster Schenkel
- 112: erste Nase

- 120: zweiter Schenkel
- 122: Ausklinkung
- 124: zweite Nase

- 130: zusätzlicher Schenkel

- 140: Erregerspule

- 150: Anker
- 152: Ausnehmung
- 154: Abschnitt
- 156: zweites Ende
- 158: erstes Ende

- 160: Mitnehmer

- 180: Bügelfeder
- 182: Schlitz
- 184: Anformung

- 190: Lagerung
- 192: Schwingfeder
- 194: Befestigungsbolzen
- A: erster seitlicher Luftspaltabschnitt
- B: zweiter seitlicher Luftspaltabschnitt
- s: Spaltbreite

- a: erster mittlerer Luftspalt
- b: zweiter mittlerer Luftabschnitt
- c: paralleler Luftspaltabschnitt
- d: Breite

- L: Längsachse

- H: magnetische Feldstärke

## Patentansprüche

1. Antriebseinheit für eine Haarschneidemaschine mit einem Antriebsmotor (1) aus
- einem im wesentlichen u-förmig ausgebildeten Stator (100) mit einem ersten Schenkel (110) und einem zweiten Schenkel (120) und wenigstens einem zusätzlichen Schenkel (130), der zwischen dem ersten Schenkel (110) und dem zweiten Schenkel (120) angeordnet ist,
- wenigstens einer Erregerspule (140), die an dem wenigstens einen zusätzlichen Schenkel (130) anordenbar ist und
- einem Anker (150), der schwingfähig ist, wobei der Stator (100) und der Anker (150) über eine Bügelfeder (180), die an einem zweiten Ende (156) des Ankers (150) und an dem Stator (100) anordenbar ist, verbunden sind, wobei zwischen erstem und zweitem Schenkel (110, 120) und dem Anker (150) seitliche Luftspaltabschnitte (A, B) und zwischen dem zusätzlichen Schenkel (130) und dem Anker (150) mittlere Luftspaltabschnitte (a, b) gebildet sind, wobei die mittleren Luftspaltabschnitte (a, b) und die seitlichen Luftspaltabschnitte (A, B) in Bezug auf eine Längsachse (L) des zusätzlichen Schenkels (130) jeweils schräg geneigt verlaufend ausgebildet sind,
**gekennzeichnet durch**
- eine erste Nase (112), die an dem ersten Schenkel (110) endseitig und von dem zusätzlichen Schenkel (130) wegweisendend angeordnet ist,
- eine Ausklinkung (122), die an dem zweiten Schenkel (120) zu dem zusätzlichen Schenkel (130) hinweisenden und zu der ersten Nase (112) korrespondierend angeordnet ist und
- eine zweite Nase (124), die an dem zweiten Schenkel (120) endseitig und eine von dem zusätzlichen Schenkel (130) wegweisend angeordnet ist.

2. Antriebseinheit nach einem der vorhergehenden Ansprüche, **dadurch gekennzeichne**t, dass der Anker (150) im Bereich des zusätzlichen Schenkels (130) eine Ausnehmung (152) aufweist, wobei diese im Wesentlichen dreiecksförmig ausgebildet ist und zum Anker weisend wenigstens einen Abschnitt (154) aufweist, der parallel zu der Längsachse (L) verläuft.

3. Antriebseinheit nach einem der vorhergehenden Ansprüche, **dadurch gekennzeichnet, dass** der zusätzliche Schenkel (130) derart ausgebildet ist, dass wenigstens ein parallel zu seiner Längsachse (L) verlaufender Abschnitt des zusätzlichen Schenkels (130) in eine in dem Anker (150) korrespondierend angeordnete Ausnehmung (152) eingreift.

4. Antriebseinheit nach einem der vorhergehenden Ansprüche, **dadurch gekennzeichnet, dass** an einem ersten Ende (158) des Ankers (150) ein Mitnehmer (160) angeordnet ist.

5. Antriebseinheit nach einem der vorhergehenden Ansprüche, **dadurch gekennzeichnet, dass** die zweite Nase (124) an dem zweiten Ende (156) des Ankers (150) zugeordneten Schenkel des Stators (100) angeordnet ist.

6. Antriebseinheit nach einem der vorhergehenden Ansprüche, **dadurch gekennzeichnet, dass** der Stator (150) an Übergängen zu den Schenkeln (110, 120, 130) mit Innenradien verstehen ist, die geeignet ausgebildet sind, einer lokalen Überhöhung einer magnetischen Flussdichte entgegenzuwirken.

7. Antriebseinheit nach einem der vorhergehenden Ansprüche, **dadurch gekennzeichnet, dass** der wenigstens eine zusätzliche Schenkel (130) dünner ausgebildet ist, als der erste und der zweite Schenkel (110, 120).

8. Antriebseinheit nach einem der vorhergehenden Ansprüche, **dadurch gekennzeichnet, dass** der wenigstens eine zusätzliche Schenkel (130) derart ausgebildet ist, dass er bei gegebener magnetischer Feldstärke annähernd in magnetischer Sättigung betrieben wird.

9. Antriebseinheit nach einem der vorhergehenden Ansprüche, **dadurch gekennzeichnet, dass** der Stator (100) zwischen dem ersten Schenkel (110) und dem wenigstens einen zusätzlichen Schenkel (130) eine Aussparung (102) aufweist.

10. Antriebseinheit nach einem der vorhergehenden Ansprüche, **dadurch gekennzeichnet, dass** zwei parallel angeordnete zusätzliche Schenkel (130) vorgesehen sind.

11. Haarschneidemaschine mit einer Antriebseinheit **dadurch gekennzeichnet, dass** die Antriebseinheit nach einem der Patentansprüche 1 bis 10 ausgebildet ist.

## Claims

1. Drive unit for a hair cutting machine having a drive motor (1), comprising
- a substantially U-shaped stator (100) having a first leg (110) and a second leg (120) and at least one additional leg (130), which is arranged between the first leg (110) and the second leg (120),
- at least one exciter coil (140) which can be arranged on the at least one additional leg (130), and
- an armature (150) which is capable of vibration, wherein the stator (100) and the armature (150) are connected by a spring bracket (180) which can be arranged on a second end (156) of the armature (150) and on the stator (100), wherein lateral gap sections (A, B) are formed between the first and second legs (110, 120) and the armature (150), and central air gap sections (a, b) are formed between the additional leg (130) and the armature (150), wherein the central air gap sections (a, b) and the lateral air gap sections (A, B) in each case run at an oblique inclination with respect to a longitudinal axis (L) of the additional leg (130), **characterised by**
- a first tab (112) which is arranged at the end of the first leg (110) and points away from the additional leg (130),
- a notch (122) which is arranged on the second leg (120), points towards the additional leg (130) and corresponds to the first lug (112), and a second lug (124) which is arranged at the end of the second leg (120) and points away from the additional leg (130).

2. Drive unit according to one of the preceding claims, **characterised in that** the armature (150) has a recess (152) in the region of the additional leg (130), wherein this recess is substantially triangular and has at least one section (154) which points towards the armature and runs parallel to the longitudinal axis (L).

3. Drive unit according to one of the preceding claims, **characterised in that** the additional leg (130) is configured in such a way that at least one section of the additional leg (130) running parallel to its longitudinal axis (L) engages in a recess (152) arranged correspondingly in the armature (150).

4. Drive unit according to one of the preceding claims, **characterised in that** a driver (160) is arranged at a first end (158) of the armature (150).

5. Drive unit according to one of the preceding claims, **characterised in that** the second lug (124) is arranged on legs of the stator (100) associated with the second end (156) of the armature (150).

6. Drive unit according to one of the preceding claims, **characterised in that** at the transitions to the legs (110, 120, 130) the stator (150) is provided with inner radii which are suitably configured to counteract a local increase in a magnetic flux density.

7. Drive unit according to one of the preceding claims, **characterised in that** the at least one additional leg (130) is thinner than the first and the second legs (110, 120).

8. Drive unit according to one of the preceding claims, **characterised in that** the at least one additional leg (130) is configured in such a way that with a given magnetic field strength it is operated approximately in magnetic saturation.

9. Drive unit according to one of the preceding claims, **characterised in that** the stator (100) has a recess (102) between the first leg (110) and the at least one additional leg (130).

10. Drive unit according to one of the preceding claims, **characterised in that** two additional legs (130) are provided which are arranged parallel.

11. Hair cutting machine having a drive unit, **characterised in that** the drive unit is configured according to one of claims 1 to 10.

## Revendications

1. Unité d'entraînement destinée à une tondeuse à cheveux comprenant un moteur d'entraînement (1) comportant :
- un stator (100) essentiellement en forme de u ayant une première branche (110) et une seconde branche (120) ainsi qu'au moins une branche supplémentaire (130) située entre la première branche (110) et la seconde branche (120),
- au moins une bobine d'excitation (140) pouvant être montée sur la branche supplémentaire (130), et
- un induit (150) susceptible d'osciller, le stator (100) et l'induit (150) étant reliés par l'intermédiaire d'un ressort en étrier (180) pouvant être monté sur une seconde extrémité (156) de l'induit (150) et sur le stator (100),
entre la première branche et la seconde branche (110, 120) et l'induit (150) étant formés des segments d'intervalle d'air latéraux (A, B) et entre la branche supplémentaire (130) et l'induit (150) étant formés des segments d'intervalle d'air médians (a, b),
les segments d'intervalle d'air médians (a, b) et les segments d'intervalle d'air latéraux (A, B) étant respectivement obliquement inclinés par rapport à l'axe longitudinal (L) de la branche supplémentaire (130),
**caractérisée par**
- un premier bec (112) qui est situé à l'extrémité de la première branche (110) et s'écarte de la branche supplémentaire (130),
- une encoche (122) qui est située sur la seconde branche (120) en étant orientée vers la branche supplémentaire (130) et correspond au premier bec (112), et
- un second bec (124) qui est situé à l'extrémité de la seconde branche (120) et s'écarte de la branche supplémentaire (130) .

2. Unité d'entraînement conforme à la revendication précédente,
**caractérisée en ce que**
l'induit (150) comporte, dans la zone de la branche supplémentaire (130) un évidement (152), essentiellement en forme de triangle et comportant, orienté vers l'induit, au moins un segment (154) qui s'étend parallèlement à l'axe longitudinal (L).

3. Unité d'entraînement conforme à l'une des revendications précédentes,
**caractérisée en ce que**
la branche supplémentaire (130) est réalisée de sorte qu'au moins un segment de celle-ci s'étendant parallèlement à son axe longitudinal (L) vienne en prise dans un évidement (152) correspondant de l'induit (150).

4. Unité d'entraînement conforme à l'une des revendications précédentes,
**caractérisée en ce que**
sur la première extrémité (158) de l'induit (150) est monté un organe d'entraînement (160).

5. Unité d'entraînement conforme à l'une des revendications précédentes,
**caractérisée en ce que**
le second bec (124) est situé sur la branche du stator (100) associée à la seconde extrémité (156) de l'induit (150) .

6. Unité d'entraînement conforme à l'une des revendications précédentes,
**caractérisée en ce que**
le stator (150) comporte au niveau des zones de transition avec les branches (110, 120, 130) des rayons internes qui sont réalisés de façon à s'opposer à une suraugmentation locale de la densité du flux magnétique.

7. Unité d'entraînement conforme à l'une des revendications précédentes,
**caractérisée en ce que**
la branche supplémentaire (130) est plus étroite que la première branche et la seconde branche (110, 120).

8. Unité d'entraînement conforme à l'une des revendications précédentes,
**caractérisée en ce que**
la branche supplémentaire (130) est réalisée de façon à fonctionner, pour une intensité du champ magnétique donnée, approximativement en saturation magnétique.

9. Unité d'entraînement conforme à l'une des revendications précédentes,
**caractérisée en ce que**
le stator (100) comporte un évidement (102) entre la première branche (110) et la branche supplémentaire (130).

10. Unité d'entraînement conforme à l'une des revendications précédentes,
**caractérisée en ce qu'**
il est prévu deux branches supplémentaires (130) parallèles.

11. Tondeuse à cheveux comprenant une unité d'entraînement,
**caractérisée en ce que**
l'unité d'entraînement est réalisée conformément à l'une des revendications 1 à 10.
